# EUROPEAN PATENT APPLICATION

(11) **EP 4 683 259 A1**
(43) Date of publication of application: **21.01.2026**
(21) Application number: 25153385.7
(22) Date of filing: 22.01.2025
(51) Int. Cl.: H04L 5/00, H04W 52/00

(54) **DATA STORAGE METHOD AND APPARATUS, AND STORAGE MEDIUM**

(30) Priority: 16.07.2024 CN 202410955216
(71) Applicant: Beijing X-Ring Technology Co., Ltd., Beijing 100085 (CN)
(72) Inventor: MA, Quan, Beijing, 100085 (CN)
(74) Representative: Stöckeler, Ferdinand

(57) **Abstract**

A data storage method includes acquiring configuration information for an uplink signal sent by a network device; and in response to a number of target configuration information to be stored being less than a number of configuration information for the uplink signal sent by the network device, storing the target configuration information, and discarding configuration information other than the target configuration information in the configuration information for the uplink signal sent by the network device.

## Description

### TECHNICAL FIELD

The present invention relates to the field of wireless communication technologies, especially to a data storage method and an apparatus, and a storage medium.

### BACKGROUND

A 5G (5-generation) communication system defined by the 3rd Generation Partnership Project (3GPP) is called as a New Radio (NR) system. In the NR system, communication between a network device and a user equipment may include measuring pathloss and performing power setting based on a pathloss measuring result to improve effectiveness of wireless communication.

In related arts, a process of measuring the pathloss requires a significant amount of memory of the user equipment, which increases costs.

### SUMMARY

The present invention seeks to solve one of the technical problems in the related arts at least to a certain extent.

In view of this, the present invention provides a data storage method and an apparatus, a user equipment, and a storage medium, to realize a reduction in data storage capacity on a user equipment and lower memory overhead.

According to a first aspect, a data storage method is provided in some embodiments of the invention. The method includes:
acquiring configuration information for an uplink signal sent by a network device; and
in response to a number of target configuration information to be stored being less than a number of configuration information for the uplink signal sent by the network device, storing the target configuration information, and discarding configuration information other than the target configuration information in the configuration information for the uplink signal sent by the network device.

According to a second aspect, a data storage apparatus is provided in some embodiments of the present invention. The apparatus includes:
an acquiring module, configured to acquire configuration information for an uplink signal sent by a network device; and
a processing module, configured to, in response to a number of target configuration information to be stored being less than a number of configuration information, store the target configuration information for the uplink signal sent by the network device, and discard configuration information other than the target configuration information in the configuration information for the uplink signal sent by the network device.

According to a third aspect, a user equipment is provided in embodiments of the invention. The user equipment includes: a memory, a processor, and a computer program stored on the memory and capable of being run on the processor. The processor is configured to implement the method as described in the first aspect when performing the computer program.

According to a fourth aspect, a non-transitory computer-readable storage medium is provided in some embodiments of the invention. The storage medium stores a computer program which causes the method as described in the first aspect to be implemented when executed by a processor.

According to a fifth aspect, a computer program product is provided in some embodiments of the invention. The computer program product stores a computer program which causes the method as described in the first aspect to be implemented when executed by a processor.

In the data storage method and the apparatus, the user equipment, and the storage medium provided in the invention, the configuration information for the uplink signal sent by the network device is acquired, and in response to the number of target configuration information to be stored being less than the number of configuration information, the target configuration information is stored, and the configuration information other than the target configuration information is discarded. Therefore, data storage capacity on a user equipment may be reduced and memory overhead may be lowered.

Additional aspects and advantages of the present invention will be partially given in the following description, and some will become obvious from the following description, or be understood through practice of the present invention.

### BRIEF DESCRIPTION OF THE DRAWINGS

The above and/or additional aspects and advantages of the present invention will become obvious and easy to understand from the following description of the embodiments in combination with the accompanying drawings, in which:
FIG. 1 is a flowchart illustrating a data storage method according to an embodiment of the present invention.
FIG. 2 is a flowchart illustrating another data storage method according to an embodiment of the present invention.
FIG. 3 is a flowchart illustrating another data storage method according to an embodiment of the present invention.
FIG. 4 is a flowchart illustrating another data storage method according to an embodiment of the present invention.
FIG. 5 is a block diagram illustrating a data storage apparatus according to an embodiment of the present invention.
FIG. 6 is a block diagram illustrating a user equipment according to an embodiment of the present invention.

### DETAILED DESCRIPTION

The embodiments of the present invention are described in detail below. Examples of the embodiments are shown in the accompanying drawings, in which the constant same or similar labels indicate the same or similar components or components with the same or similar functions. The embodiments described below with reference to the accompanying drawings are examples, and are intended to explain the invention, but should not be understood as a limitation to the invention. On the contrary, embodiments of the present invention include all changes, modifications and equivalents that fall within the scope of the appended claims.

A data storage method and an apparatus, a user equipment, and a storage medium of embodiments of the present invention are described below with reference to the accompanying drawings.

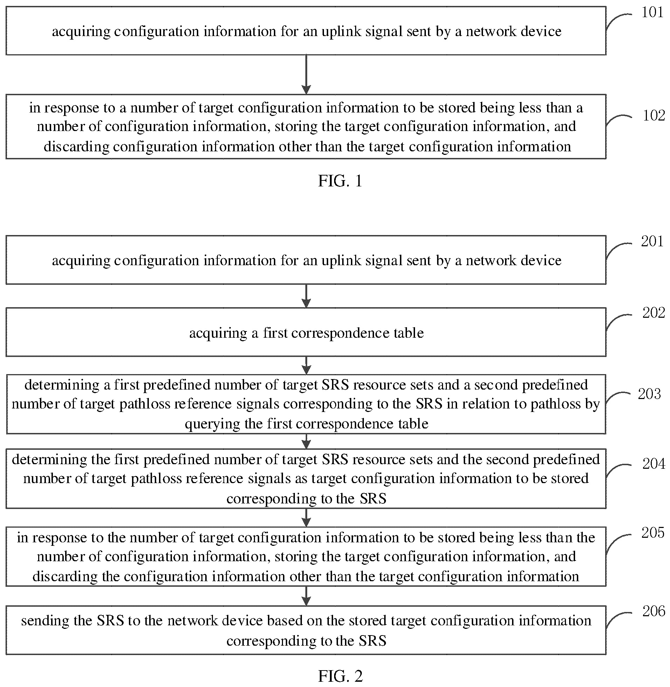

FIG. 1 is a flowchart illustrating a data storage method according to an embodiment of the present invention.

An embodiment of the present invention is described by taking the data storage method being configured in a data storage apparatus as an example. The data storage apparatus may be applied in any one user equipment.

User equipments may be arranged throughout at least part of a mobile communication system, and each user equipment may be stationary or mobile. The user equipment may also be referred to by those skilled in the art as a mobile station, a user station, a mobile unit, a user unit, a wireless unit, a remote unit, a mobile device, a terminal device, a wireless device, a wireless communication device, a remote device, a mobile user station, an access user device, a mobile user device, a wireless user device, a remote user device, a handheld device, a user agent, a mobile client, a client, an on-vehicle device, a wearable device, or some other appropriate terms. The terminal device may be a cellular phone, a personal digital assistant (PDA), a wireless modem, a wireless communication device, a handheld device, a tablet, a laptop, a cordless phone, a wireless local loop (WLL) station, etc., capable of communicating with a network device in the mobile communication system.

The network device may be deployed in wireless access network to provide wireless access functionality for the terminal device. The network device may be a base station (BS). The network device may communicate wirelessly with the terminal device via one or more antennas. The network device may provide communication coverage for a geographical region where the network device is. The base station may include different types of devices such as a macro base station, a micro base station, a relay station, an access point, etc. In some embodiments, the base station may be referred to by those skilled in the art as a base station transceiver, a wireless base station, an access point, a wireless transceiver, a basic service set (BSS), an extended service set (ESS), a NodeB, an evolved NodeB (eNB or eNB), or some other appropriate terms. For example, in the 5G system, the base station is referred to as a gNB. For the convenience of description, in an embodiment of the present invention, devices that provide wireless communication functions for the user equipment are collectively referred to as the network device.

As illustrated in FIG. 1, the method may include following blocks.

At block 101, configuration information for an uplink signal sent by a network device is acquired.

The uplink signal refers to a wireless signal sent by a user equipment to the network device. The uplink signal is determined based on the configuration information for the uplink sent by the network device. In a scenario, the uplink signal is used to determine pathloss of communication between the network device and the user equipment (UE), and the pathloss is used for power control between the network device and the user equipment. In actual application scenarios, the network device, such as a base station (gNodeB), do not directly send the uplink signal to the user equipment, instead of sending the configuration information about how to send the uplink signal to the user equipment. These configuration information are key guidance for the UE to generate and send the uplink signal for the network device to measure an uplink condition (including the pathloss).

As an implementation, the configuration information for the uplink signal sent by the network device to the user equipment is transmitted through radio resource control (RRC) signaling.

At block 102, in response to a number of target configuration information to be stored being less than a number of configuration information, the target configuration information is stored, and configuration information other than the target configuration information is discarded.

In an embodiment of the present invention, in an NR system, 3GPP protocol 38.331 specifies various configuration information corresponding to different uplink signals, where the content and quantity of corresponding configuration information vary depending on different uplink signals. The network device may send the configuration information for the uplink signal according to a protocol specification. When receiving the configuration information for uplink signal sent by the network device, the user equipment may store the configuration information for uplink signal in the protocol specification, for example, in a storage unit of the UE. Due to a large amount of configuration information for uplink signal sent by the network device, it occupies a large storage capacity of the UE, requiring the user equipment to configure a memory storage unit with a larger capacity, increasing costs and a size of the UE.

In actual applications, it has been found through long-term external field testing that the configuration information actually required by the network device are not all the configuration information specified in the protocol, but only partial configuration information. Therefore, the target configuration information to be stored corresponding to the uplink signal may be determined by query based on the predefined configuration information. Different uplink signals correspond to different target configuration information to be stored. In a case of determining that the number of target configuration information to be stored is less than the number of configuration information for the uplink signal sent by the network device, the target configuration information is stored and other configuration information except for the target configuration information is discarded. Since the target configuration information is a part of the configuration information for the uplink signal sent by the network device, storing the target configuration information in the configuration information sent by the network device and discarding the configuration information other than the target configuration information achieves a reduction in the amount of data to be stored on the user equipment side, which may lower costs and an occupied space of the UE storage unit and help to reduce the size of the UE.

The storage unit in the UE, may include, such as, one or more of a double data rate synchronous dynamic random access memory (DDR), or an on-chip memory in a chip.

In an implementation of the present invention, the target configuration information to be stored corresponding to the uplink signal is determined, and the target configuration information may be stored in the DDR. Furthermore, the uplink configuration information stored in the DDR may also be transferred to the on-chip memory of the chip. Due to the reduced number of stored target configuration information, consumption of the storage space is reduced, and the terminal may be configured with a storage unit with a smaller capacity, and it helps to reduce a design area of some modules in the chip, lower costs, and reduce the size of the user equipment.

In the data storage method provided in an embodiment of the present invention, the configuration information for the uplink signal sent by the network device is acquired, and in response to the number of target configuration information to be stored being less than the number of configuration information, the target configuration information is stored, and the configuration information other than the target configuration information is discarded. Therefore, data storage capacity on a user equipment may be reduced and memory overhead may be lowered.

In actual scenarios, the configuration information varies depending on the uplink signal. The uplink signal includes one or more of a channel sounding reference signal (SRS), a physical uplink control channel (PUCCH) signal, or a physical uplink shared channel (PUSCH) signal. The following are explanations for different scenarios.

On the basic of the above embodiments, taking an example of the uplink signal including a sounding reference signal (SRS), FIG. 2 is a flowchart illustrating another data storage method according to an embodiment of the present invention. As illustrated in FIG. 2, the method may include following blocks.

At block 201, configuration information for an uplink signal sent by a network device is acquired.

The uplink signal includes the sounding reference signal (SRS).

The configuration information of the SRS includes a transmission bandwidth, a transmission period, a resource set, and power control information, etc.

At block 202, a first correspondence table is acquired.

The first correspondence table stores an identification and a number of the configuration information corresponding to the SRS.

At block 203, a first predefined number of target SRS resource sets and a second predefined number of target pathloss reference signals corresponding to the SRS in relation to pathloss are determined by querying the first correspondence table.

In an implementation of the present invention, in the configuration information corresponding to the SRS signal specified in 3GPP protocol 38.331, configuration information for pathloss measurement includes a pathloss reference signal SRS-PathlossReferenceRS and selectable resource sets SRS-ResourceSets. A maximum number maxNrofSRS-PathlossReferenceRS-r16 of the pathloss reference signals specified in the protocol is 64, and a maximum number maxNrofSRS-ResourceSets of the resource sets is 16. That is, for each pathloss reference signal in the 64 SRS-PathlossReferenceRSs, the number of selectable resource sets is 16. For example, one configuration information occupies 4 bytes of memory, then storing complete configuration information specified in the protocol totally occupies 4096 bytes of memory, namely, 4*16*64=4096 Byte.

The resource set SRS-ResourceSets refers to "SRS resource sets in a BWP", which refers to an SRS resource set defined in a specific BWP configuration. The SRS resource set defines a set of rules that explain how the UE arranges and sends an SRS signal in time and frequency domains of the BWP.

At block 204, the first predefined number of target SRS resource sets and the second predefined number of target pathloss reference signals are determined as target configuration information to be stored corresponding to the SRS.

In actual scenarios, there is no need to store each of SRS-PathlossReferenceRSs and SRS-ResourceSets in the maximum number. Through testing, it is found that the number of SRS-PathlossReferenceRSs to be stored in the user equipment is the first predefined number, for example, 4, and the number of SRS-ResourceSets to be stored in the user equipment is the second predefined number, for example, 4. Therefore, the total amount of memory required for the user equipment to store configuration information related to pathloss is 4*4*4=64 Bytes, while the configuration information other than the target configuration information is discarded and not stored. Therefore, a capacity of the memory that can be saved is 4096-64=4032 Byte. Saving of the storage capacity does not affect consistency of relevant protocols and admission test cases of operators, reducing the occupied content capacity and lowering memory consumption.

It should be noted that the first predefined number of target SRS resource sets may be a first predefined number of resource sets in all resource sets, such as the first predefined number of resource sets ranked first, e. g., four resource sets with identification information numbered 0, 1, 2, and 3. The second predefined number of target pathloss reference signals may be a second predefined number of resource sets in the pathloss reference signals corresponding to all SRS signals, such as the second predefined number of signals ranked first, e. g., four signals with identification information numbered 0, 1, 2, and 3.

At block 205, in response to the number of target configuration information to be stored being less than the number of configuration information, the target configuration information is stored, and the configuration information other than the target configuration information is discarded.

In an implementation of the present invention, the target configuration information corresponding to the SRS signal for pathloss testing is stored in the storage unit of the user equipment UE, and the configuration information other than the target configuration information is discarded. Since the target configuration information is part of the configuration information for the uplink signal sent by the network device, storing the target configuration information in the configuration information sent by the network device and discarding the configuration information other than the target configuration information may reduce memory consumption, lower costs, and improve product performance.

At block 206, the SRS is sent to the network device based on the stored target configuration information corresponding to the SRS.

In an embodiment of the present invention, the SRS sent to the network device is determined based on the target configuration information corresponding to the SRS stored in the storage unit of the UE, namely, the first predefined number of target SRS resource sets SRS-ResourceSets and the second predefined number of target pathloss reference signals SRS-PathlossReferenceRSs. Therefore, when receiving the SRS, the network device determines the pathloss and performs power control based on the determined pathloss, thus improving effectiveness of wireless communication.

In the data storage method provided in an embodiment of the present invention, the configuration information for the SRS signal sent by the network device is acquired, the target configuration information to be stored corresponding to the SRS signal is queried, and in response to the number of target configuration information to be stored being less than the number of configuration information, the target configuration information to be stored corresponding to the SRS signal is stored in the storage unit of the UE. Therefore, data storage capacity on the user equipment may be reduced and memory overhead may be lowered.

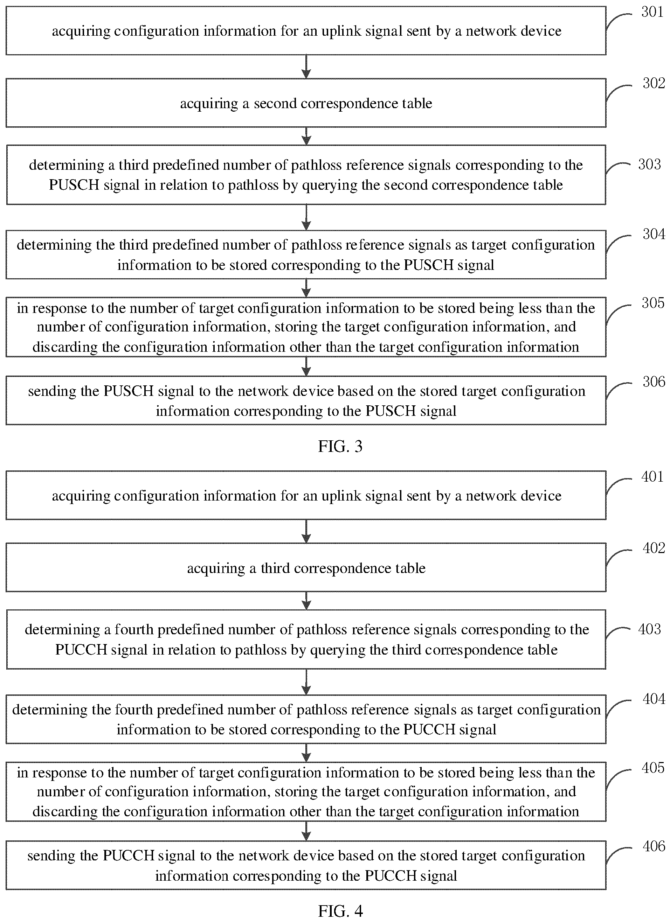

On the basic of the above embodiments, taking an example of the uplink signal including a physical uplink shared channel (PUSCH) signal, the PUSCH signal may be understood as a signal transmitted based on a PUSCH channel, FIG. 3 is a flowchart illustrating another data storage method according to an embodiment of the present invention. As illustrated in FIG. 3, the method may include following blocks.

At block 301, configuration information for an uplink signal sent by a network device is acquired.

The uplink signal includes the physical uplink shared channel (PUSCH) signal.

The configuration information related to pathloss corresponding to the PUSCH signal includes a reference signal related to pathloss measurement.

At block 302, a second correspondence table is acquired.

The second correspondence table stores an identification and a number of the configuration information corresponding to the PUSCH signal. The second correspondence table is used for identification to distinguish it from the first correspondence table mentioned above and the subsequent third correspondence table.

At block 303, a third predefined number of pathloss reference signals corresponding to the PUSCH signal in relation to pathloss are determined by querying the second correspondence table.

In an implementation of the present invention, in the configuration information corresponding to the PUSCH signal specified in 3GPP protocol 38.331, configuration information for pathloss measurement includes maxNrofPUSCH-PathlossReferenceRSs-r16. The user equipment transmits the PUSCH signal to the network device according to the number of PUSCH-PathlossReferenceRSs-r16, and the network device determines the pathloss according to the received PUSCH signal, and performs power control based on the pathloss. A maximum number maxNrofPUSCH-PathlossReferenceRSs-r16 specified in the protocol of the NR is 64. For example, one configuration information occupies 4 bytes of memory, then storing complete configuration information specified in the protocol totally occupies 256 bytes of memory, namely, 4*64=256 Byte.

At block 304, the third predefined number of pathloss reference signals are determined as target configuration information to be stored corresponding to the PUSCH signal.

In actual scenarios, there is no need to store PUSCH-PathlossReferenceRSs-r16 in the maximum number. Through long-term testing, it is found that the number of PUSCH-PathlossReferenceRSs-r16 to be stored in the user equipment is the third predefined number, for example, 4. Therefore, the total amount of memory required for the user equipment to store configuration information related to pathloss is 4*4=16 Byte, while the configuration information other than the target configuration information is discarded and not stored. Therefore, a capacity of the memory that can be saved is 256-16=240 Byte. Saving of the storage capacity does not affect consistency of relevant protocols and admission test cases of operators, reducing the occupied content capacity and lowering memory consumption.

It should be noted that the third predefined number of PUSCH-PathlossReferenceRSs-r16 may be a third predefined number of signals in all PUSCH-PathlossReferenceRSs-r16, such as the third predefined number of signals ranked first, e. g., four signals with identification information numbered 0, 1, 2, and 3.

At block 305, in response to the number of target configuration information to be stored being less than the number of configuration information, the target configuration information is stored, and the configuration information other than the target configuration information is discarded.

In an embodiment of the present invention, the target configuration information corresponding to the PUSCH signal for pathloss testing is stored in the storage unit of the user equipment UE, and the configuration information other than the target configuration information is discarded. Since the target configuration information is part of the configuration information for the uplink signal sent by the network device, storing the target configuration information in the configuration information corresponding to the PUSCH signal sent by the network device and discarding the configuration information other than the target configuration information may reduce memory consumption, lower costs, and improve product performance.

At block 306, the PUSCH signal is sent to the network device based on the stored target configuration information corresponding to the PUSCH signal.

In an embodiment of the present invention, the PUSCH signal sent to the network device is determined based on the target configuration information corresponding to the PUSCH signal stored in the storage unit of the UE. Therefore, when receiving the PUSCH signal, the network device determines the pathloss and performs power control based on the determined pathloss, thus improving effectiveness of wireless communication.

In the data storage method provided in an embodiment of the present invention, the configuration information for the PUSCH signal sent by the network device is acquired, the target configuration information to be stored corresponding to the PUSCH signal is queried, and in response to the number of target configuration information to be stored being less than the number of configuration information, the target configuration information is stored, and the configuration information other than the target configuration information is discarded. Therefore, data storage capacity on the user equipment may be reduced and memory overhead may be lowered.

On the basic of the above embodiments, taking an example of the uplink signal including a physical uplink control channel (PUCCH) signal, the PUCCH signal may be understood as a signal transmitted based on a PUCCH channel, FIG. 4 is a flowchart illustrating another data storage method according to an embodiment of the present invention. As illustrated in FIG. 4, the method may include following blocks.

At block 401, configuration information for an uplink signal sent by a network device is acquired.

The uplink signal includes the physical uplink control channel (PUCCH) signal. The configuration information related to pathloss corresponding to the PUCCH signal includes a reference signal related to pathloss measurement.

At block 402, a third correspondence table is acquired.

The third correspondence table stores an identification and a number of the configuration information corresponding to the PUCCH signal.

At block 403, a fourth predefined number of pathloss reference signals corresponding to the PUCCH signal in relation to pathloss is determined by querying the third correspondence table.

In an implementation of the present invention, in the configuration information corresponding to the PUCCH signal specified in 3GPP protocol 38.331, configuration information for pathloss measurement includes maxNrofPUCCH-PathlossReferenceRSs-r16. The user equipment transmits the PUCCH signal to the network device according to the number ofPUCCH-PathlossReferenceRSs-r16, and the network device determines the pathloss according to the received PUCCH signal, and performs power control based on the pathloss. A maximum number maxNrofPUCCH-PathlossReferenceRSs-r16 specified in the protocol of the NR is 64. For example, one configuration information occupies 4 bytes of memory, then storing complete configuration information specified in the protocol totally occupies 256 bytes of memory, namely, 4*64=256 Byte.

At block 404, the fourth predefined number of pathloss reference signals are determined as target configuration information to be stored corresponding to the PUCCH signal.

In actual scenarios, there is no need to store PUCCH-PathlossReferenceRSs-r16 in the maximum number. Through testing, it is found that the number of PUCCH-PathlossReferenceRSs-r16 to be stored in the user equipment is the fourth predefined number, for example, 4. Therefore, the total amount of memory required for the user equipment to store configuration information related to pathloss corresponding to the PUCCH signal is 4*4=16 Byte, while the configuration information other than the target configuration information is discarded and not stored. Therefore, a capacity of the memory that can be saved is 256-16=240 Byte. Saving of the storage capacity does not affect consistency of relevant protocols and admission test cases of operators, reducing the occupied content capacity and lowering memory consumption.

It should be noted that the fourth predefined number of PUCCH-PathlossReferenceRSs-r16 may be a fourth predefined number of signals in all PUCCH-PathlossReferenceRSs-r16, such as fourth predefined number of signals ranked first, e. g., four signals with identification information numbered 0, 1, 2, and 3.

At block 405, in response to the number of target configuration information to be stored being less than the number of configuration information, the target configuration information is stored, and the configuration information other than the target configuration information is discarded.

In an implementation of the present invention, the target configuration information corresponding to the PUCCH signal for pathloss testing is stored in the storage unit of the user equipment UE, and the configuration information other than the target configuration information in the configuration information corresponding to the PUCCH signal is discarded. Since the target configuration information is part of the configuration information for the uplink signal sent by the network device, storing the target configuration information in the configuration information sent by the network device and discarding the configuration information other than the target configuration information may reduce memory consumption, lower costs, and improve product performance.

At block 406, the PUCCH signal is sent to the network device based on the stored target configuration information corresponding to the PUCCH signal.

In an embodiment of the present invention, the PUCCH signal sent to the network device is determined based on the target configuration information corresponding to the PUCCH signal stored in the storage unit of the UE. Therefore, when receiving the PUCCH signal, the network device determines the pathloss and performs power control based on the determined pathloss, thus improving effectiveness of wireless communication.

In the data storage method provided in an embodiment of the present invention, the configuration information for the PUCCH signal sent by the network device is acquired, the target configuration information to be stored corresponding to the PUCCH signal is queried, and in response to the number of target configuration information to be stored being less than the number of configuration information, the target configuration information is stored, and the configuration information other than the target configuration information is discarded. Therefore, data storage capacity on the user equipment may be reduced and memory overhead may be lowered.

Based on the above embodiment, in a case of storing the target configuration information to be stored corresponding to the uplink signal in the storage unit of the user equipment UE, the uplink signal is sent to the network device according to the target configuration information to be stored. In a case of receiving the uplink signal, the network device determines the pathloss and performs power control based on the determined pathloss, thus improve effectiveness of wireless communication.

In order to implement the above embodiments, an embodiment of the present invention also provides a data storage apparatus.

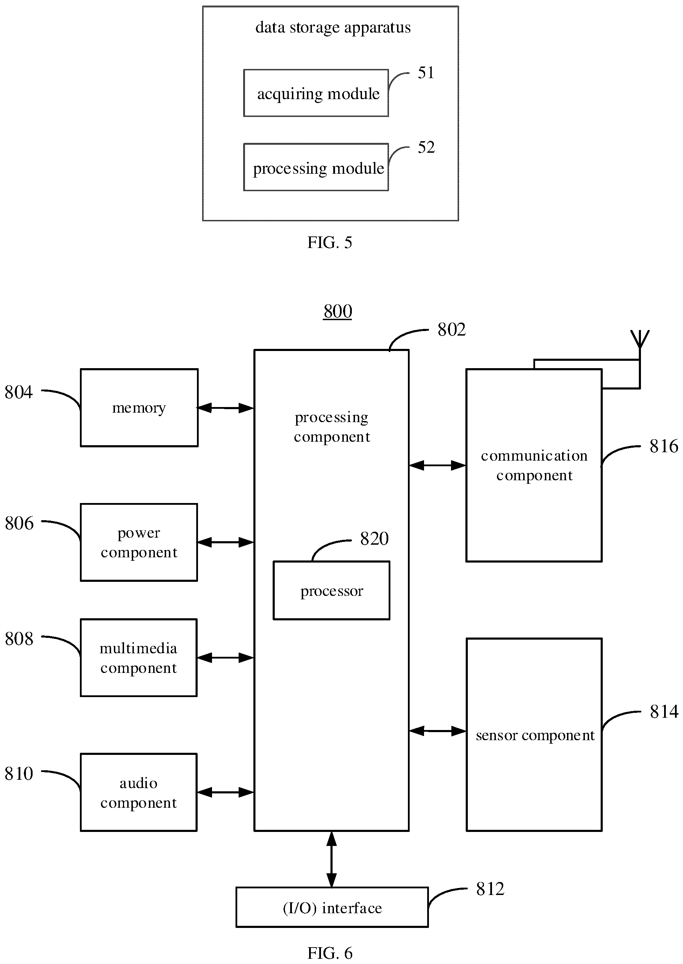

FIG. 5 is a block diagram illustrating a data storage apparatus according to an embodiment of the present invention.

As illustrated in FIG. 5, the apparatus for communication control includes an acquiring module 51 and a processing module 52.

The acquiring module 51 is configured to acquire configuration information for an uplink signal sent by a network device.

The processing module 52 is configured to, in response to a number of target configuration information to be stored being less than a number of configuration information, store the target configuration information, and discard configuration information other than the target configuration information.

Further, in an implementation of the present invention, the processing module 52 is further configured to,
query the target configuration information to be stored corresponding to the uplink signal;
in response to the number of target configuration information to be stored being less than the number of configuration information, store the target configuration information, and discard the configuration information other than the target configuration information.

In an implementation of the present invention, the uplink signal includes one or more of a channel sounding reference signal (SRS), a physical uplink control channel (PUCCH) signal, or a physical uplink shared channel (PUSCH) signal.

In an implementation of the present invention, the uplink signal comprises a channel sounding reference signal (SRS), the processing module 52 is further configured to:
acquire a first correspondence table;
determine a first predefined number of target SRS resource sets and a second predefined number of target pathloss reference signals corresponding to the SRS in relation to pathloss by querying the first correspondence table;
determine the first predefined number of target SRS resource sets and the second predefined number of target pathloss reference signals as target configuration information to be stored corresponding to the SRS.

In an implementation of the present invention, the uplink signal comprises a physical uplink shared channel (PUSCH) signal, the processing module 52 is further configured to:
acquire a second correspondence table;
determine a third predefined number of pathloss reference signals corresponding to the PUSCH signal in relation to pathloss by querying the second correspondence table;
determine the third predefined number of pathloss reference signals as target configuration information to be stored corresponding to the PUSCH signal.

In an implementation of the present invention, the uplink signal comprises a physical uplink control channel (PUCCH) signal, the processing module 52 is further configured to:
acquire a third correspondence table;
determine a fourth predefined number of pathloss reference signals corresponding to the PUCCH signal in relation to pathloss by querying the third correspondence table;
determine the fourth predefined number of pathloss reference signals as target configuration information to be stored corresponding to the PUCCH signal.

In an implementation of the present invention, the apparatus further includes:
a sending module, configured to send the uplink signal to the network device based on the target configuration information to be stored.

It is noted that the above explanation of the method embodiments also applies to the apparatus of this embodiment, and will not be repeated here.

In the data storage apparatus provided in an embodiment of the invention, the configuration information for the uplink signal sent by the network device is acquired, and in response to the number of target configuration information to be stored being less than the number of configuration information, the target configuration information is stored, and the configuration information other than the target configuration information is discarded. Therefore, data storage capacity on a user equipment may be reduced and memory overhead may be lowered.

In order to implement the above embodiments, the present invention also provides a user equipment. The user equipment includes: a memory, a processor, and a computer program stored on the memory and capable of being run on the processor. The processor is configured to implement the method embodiments as described above when performing the computer program.

In order to implement the above embodiments, the present invention also provides a non-transitory computer-readable storage medium. The storage medium stores a computer program which causes the method embodiments as described above to be implemented when executed by a processor.

In order to implement the above embodiments, the present invention also provides a computer program product. The computer program product stores a computer program which causes the method embodiments as described above to be implemented when executed by a processor.

FIG. 6 is a block diagram illustrating a user equipment according to an embodiment of the present invention. For example, the user equipment 800 may be a mobile phone, a computer, a digital broadcasting terminal, a message transceiver device, a game console, a tablet device, a medical device, a fitness device and a personal digital assistant.

Referring to FIG. 6, the user equipment 800 may include one or more of the following components: a processing component 802, a memory 804, a power component 806, a multimedia component 808, an audio component 810, an input/output (I/O) interface 812, a sensor component 814, and a communication component 816.

The processing component 802 typically controls overall operations of the user equipment 800, such as the operations associated with display, telephone calls, data communications, camera operations, and recording operations. The processing component 802 may include one or more processors 820 to execute instructions to perform all or part of the steps in the above described methods. Moreover, the processing component 802 may include one or more modules which facilitate the interaction between the processing component 802 and other components. For example, the processing component 802 may include a multimedia module to facilitate the interaction between the multimedia component 808 and the processing component 802.

The memory 804 is configured to store various types of data to support the operation of the user equipment 800. Examples of such data include instructions for any applications or methods operated on the user equipment 800, contact data, phonebook data, messages, pictures, videos, etc. The memory 804 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 806 provides power to various components of the user equipment 800. The power component 806 may include a power management system, one or more power sources, and any other components associated with the generation, management, and distribution of power in the user equipment 800.

The multimedia component 808 includes a screen providing an output interface between the user equipment 800 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 808 may include a front camera and/or a rear camera. When the electronic device is in an operation mode, such as a shooting mode or a video mode, the front camera or the rear camera may receive external multimedia data. Each front camera and rear camera may be a fixed optical lens system or with focal length and optical zoom capacity.

The audio component 810 is configured to output and/or input audio signals. For example, the audio component 810 includes a microphone (MIC) configured to receive an external audio signal when the user equipment 800 is in an operation mode, such as a call mode, a recording mode, and a speech recognition mode. The microphone is configured to receive external audio signals. The received audio signal may be further stored in the memory 804 or transmitted via the communication component 816. In some embodiments, the audio component 810 further includes a speaker to output audio signals.

The I/O interface 812 provides an interface between the processing component 802 and peripheral interface modules, such as a keyboard, a click wheel, buttons, and the like. The buttons may include, but are not limited to, a home button, a volume button, a power-on button, and a lock button.

The sensor component 814 includes one or more sensors, configured to provide various aspects of status assessment for the electronic device. For example, the sensor component 814 may detect the on/off state of the electronic device and the relative positioning of the component. For example, the component is a display and a keypad of the electronic device. The sensor component 814 may further detect the location change of the electronic device or one component of the electronic device, the presence or absence of contact between the user and the device, the orientation or acceleration/deceleration of the device, and the temperature change of the device. The sensor component 814 may include a proximity sensor, which is configured to detect the existence of the objects nearby without any physical contact. The sensor component 814 may further include a light sensor such as CMOS or CCD image sensor, which is configured to use in imaging applications. In some embodiments, the sensor component 814 may further include an acceleration transducer, a gyroscope sensor, a magnetic sensor, a pressure sensor or a temperature sensor.

The communication component 816 is configured to facilitate communication, wired or wirelessly, between the user equipment 800 and other devices. The user equipment 800 can access a wireless network based on a communication standard, such as Wi-Fi, 4G, or 5G, or a combination thereof. In an embodiment, the communication component 816 receives a broadcast signal or broadcast associated information from an external broadcast management system via a broadcast channel. In an embodiment, the communication component 816 further includes a near field communication (NFC) module to facilitate short-range communications. For example, the NFC module may be implemented based on a radio frequency identity (RFID) technology, an infrared data association (IrDA) technology, an ultra-wideband (UWB) technology, a Bluetooth (BT) technology, and other technologies.

In embodiments, the user equipment 800 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In some embodiments, there is also provided a non-transitory computer readable storage medium including instructions, such as included in the memory 804, executable by the processor 820 in the user equipment 800, for performing the above-described methods. For example, the non-transitory computer-readable storage medium may be a ROM, a RAM, a CDROM, a magnetic tape, a floppy disc, an optical data storage device, and the like.

Reference throughout this specification to "an embodiment", "some embodiments", "an example", "a specific example", or "some examples" means that a particular feature, structure, material, or characteristic described in connection with the embodiment or example is included in at least one embodiment or example of the present invention. Thus, the appearances of the phrases in various places throughout this specification are not necessarily referring to the same embodiment or example of the present invention. Furthermore, the particular features, structures, materials, or characteristics may be combined in any suitable manner in one or more embodiments or examples. In addition, those skilled in the field can associate and combine different embodiments or examples described in this specification, as well as the features of different embodiments or examples, without conflicting with each other.

In addition, terms "first" and "second" are only used for descriptive purposes and cannot be understood as indicating or implying relative importance or implying the number of technical features indicated. Therefore, the features that are limited to "first" and "second" can explicitly or implicitly include at least one feature. In the description of the present invention, "a plurality of" means at least two, such as two, three, etc., unless otherwise specified.

Any process or method described in a flow chart or described herein in other ways may be understood to include one or more modules, segments or portions of codes of executable instructions for achieving specific logical functions or steps in the process, and the scope of an embodiment of the present invention includes other implementations, in which the functions can be performed in a basically simultaneous manner or in a reverse order according to the functions involved, not in the order shown or discussed, which should be understood by those skilled in the art to which the embodiment of the present invention belongs.

The logic and/or step described in other manners herein or shown in the flow chart, for example, a particular sequence table of executable instructions for realizing the logical function, may be specifically achieved in any computer readable medium to be used by the instruction execution system, device or equipment (such as the system based on computers, the system comprising processors or other systems capable of obtaining the instructions from the instruction execution system, device and equipment and executing the instructions), or to be used in combination with the instruction execution system, device and equipment. As to the specification, "the computer readable medium" may be any device adaptive for including, storing, communicating, propagating or transferring programs to be used by or in combination with the instruction execution system, device or equipment. More specific examples of the computer readable medium comprise but are not limited to: an electronic connection (an electronic device) with one or more wires, a portable computer enclosure (a magnetic device), a random access memory (RAM), a read only memory (ROM), an erasable programmable read-only memory (EPROM or a flash memory), an optical fiber device and a portable compact disk read-only memory (CDROM). In addition, the computer readable medium may even be a paper or other appropriate medium capable of printing programs thereon, this is because, for example, the paper or other appropriate medium may be optically scanned and then edited, decrypted or processed with other appropriate methods when necessary to obtain the programs in an electric manner, and then the programs may be stored in the computer memories.

It should be understood that each part of the present invention may be realized by hardware, software, firmware or their combination. In the above embodiments, a plurality of steps or methods may be realized by software or firmware stored in the memory and executed by the appropriate instruction execution system. For example, if it is realized by the hardware, likewise in another embodiment, the steps or methods may be realized by one or a combination of the following techniques known in the art: a discrete logic circuit having a logic gate circuit for realizing a logic function of a data signal, an application-specific integrated circuit having an appropriate combination logic gate circuit, a programmable gate array (PGA), a field programmable gate array (FPGA), etc.

Those skilled in the art shall understand that all or parts of the steps in the above exemplifying method of the present invention may be achieved by commanding the related hardware with programs. The programs may be stored in a computer readable storage medium, and the programs comprise one or a combination of the steps in the method embodiments of the present invention when run on a computer.

In addition, each function cell of the embodiments of the present invention may be integrated in a processing module, or these cells may be separate physical existence, or two or more cells are integrated in a processing module. The integrated module may be realized in a form of hardware or in a form of software function modules. When the integrated module is realized in a form of software function module and is sold or used as a standalone product, the integrated module may be stored in a computer readable storage medium.

The storage medium mentioned above may be read-only memories, magnetic disks, CD, etc. Although explanatory embodiments have been shown and described, it would be appreciated by those skilled in the art that the above embodiments are not to be construed to limit the present invention, and changes, alternatives, and modifications can be made in the embodiments without departing from the scope of the present invention as defined by the appended claims.

## Claims

1. A data storage method, comprising:
acquiring (101, 201, 301, 401) configuration information for an uplink signal sent by a network device; and
in response to a number of target configuration information to be stored being less than a number of configuration information for the uplink signal sent by the network device, storing (102, 205, 305, 405) the target configuration information, and discarding configuration information other than the target configuration information in the configuration information for the uplink signal sent by the network device.

2. The method according to claim 1, further comprising:
determining the target configuration information to be stored corresponding to the uplink signal.

3. The method according to claim 2, wherein the uplink signal comprises one or more of a channel sounding reference signal, SRS, a physical uplink control channel, PUCCH, signal, or a physical uplink shared channel, PUSCH, signal.

4. The method according to claim 2 or 3, wherein the uplink signal comprises the SRS, and determining the target configuration information to be stored corresponding to the uplink signal comprises:
acquiring (202) a first correspondence table;
determining (203) a first predefined number of target SRS resource sets and a second predefined number of target pathloss reference signals corresponding to the SRS in relation to pathloss based on the first correspondence table; and
determining (204) the first predefined number of target SRS resource sets and the second predefined number of target pathloss reference signals as target configuration information to be stored corresponding to the SRS.

5. The method according to any one of claims 2 to 4, wherein the uplink signal comprises the PUSCH signal, and determining the target configuration information to be stored corresponding to the uplink signal comprises:
acquiring (302) a second correspondence table;
determining (303) a third predefined number of pathloss reference signals corresponding to the PUSCH signal in relation to pathloss based on the second correspondence table; and
determining (304) the third predefined number of pathloss reference signals as target configuration information to be stored corresponding to the PUSCH signal.

6. The method according to any one of claims 2 to 5, wherein the uplink signal comprises the PUCCH signal, and determining the target configuration information to be stored corresponding to the uplink signal comprises:
acquiring (402) a third correspondence table;
determining (403) a fourth predefined number of pathloss reference signals corresponding to the PUCCH signal in relation to pathloss based on the third correspondence table; and
determining (404) the fourth predefined number of pathloss reference signals as target configuration information to be stored corresponding to the PUCCH signal.

7. The method according to any one of claims 1 to 6, further comprising:
sending (206, 306, 406) the uplink signal to the network device based on the target configuration information to be stored.

8. A data storage apparatus, comprising:
an acquiring module (51), configured to acquire configuration information for an uplink signal sent by a network device; and
a processing module (52), configured to, in response to a number of target configuration information to be stored being less than a number of configuration information, store the target configuration information for the uplink signal sent by the network device, and discard configuration information other than the target configuration information in the configuration information for the uplink signal sent by the network device.

9. The apparatus according to claim 8, wherein the processing module (52) is further configured to,
determining the target configuration information to be stored corresponding to the uplink signal;
optionally, the uplink signal comprises one or more of a channel sounding reference signal, SRS, a physical uplink control channel, PUCCH signal, or a physical uplink shared channel, PUSCH, signal.

10. The apparatus according to claim 9, wherein the uplink signal comprises the SRS, and the processing module (52) is further configured to,
acquire a first correspondence table;
determine a first predefined number of target SRS resource sets and a second predefined number of target pathloss reference signals corresponding to the SRS in relation to pathloss based on the first correspondence table; and
determine the first predefined number of target SRS resource sets and the second predefined number of target pathloss reference signals as target configuration information to be stored corresponding to the SRS.

11. The apparatus according to claim 9 or 10, wherein the uplink signal comprises the PUSCH signal, and the processing module (52) is further configured to:
acquire a second correspondence table;
determine a third predefined number of pathloss reference signals corresponding to the PUSCH signal in relation to pathloss based on the second correspondence table; and
determine the third predefined number of pathloss reference signals as target configuration information to be stored corresponding to the PUSCH signal.

12. The apparatus according to any one of claims 9 to 11, wherein the uplink signal comprises the PUCCH signal, and the processing module (52) is further configured to,
acquire a third correspondence table;
determine fourth predefined number of pathloss reference signals corresponding to the PUCCH signal in relation to pathloss based on the third correspondence table; and
determine the fourth predefined number of pathloss reference signals as target configuration information to be stored corresponding to the PUCCH signal.

13. The apparatus according to any one of claims 8 to 12, further comprising:
a sending module, configured to send the uplink signal to the network device based on the target configuration information to be stored.

14. A non-transitory computer-readable storage medium storing a computer program which causes the method according to any one of claims 1 to 7 to be implemented when executed by a processor.

15. A computer program product, comprising a computer program which causes the method according to any one of claims 1 to 7 to be implemented when executed by a processor.
